# EUROPEAN PATENT APPLICATION

(11) **EP 4 617 406 A1**
(43) Date of publication of application: **17.09.2025**
(21) Application number: 23888438.1
(22) Date of filing: 17.10.2023
(51) Int. Cl.: C25B 11/075, B01J 23/72, B01J 37/08, C25B 3/03, C25B 9/00, C25B 11/052, C25B 11/077, C25B 11/081, C25B 11/091, H01M 4/86, H01M 4/88, H01M 4/90, H01M 4/92

(54) **COMPOSITION FOR FORMING CATALYST LAYER, METHOD FOR PRODUCING CATALYST LAYER USING SAME, GAS DIFFUSION ELECTRODE AND ELECTROLYSIS CELL USING SAME**

(30) Priority: 11.11.2022 JP 2022181206
(71) Applicant: Maxell, Ltd., Kyoto 618-8525 (JP)
(72) Inventor: MASAMOTO, Wakana, Kyoto 618-8525 (JP); KISHIMI, Yuko, Kyoto 618-8525 (JP); MIZUTANI, Takuo, Kyoto 618-8525 (JP)
(74) Representative: Diehl & Partner
(86) International application number: PCT/JP2023/037492
(87) International publication number: WO 2024/101085

(57) **Abstract**

A composition for forming a catalyst layer according to the present application includes: catalyst particles; a binder; and a solvent, wherein the catalyst particles have an average particle size of primary particles of 1 to 500 nm, the solvent has a surface tension in a range from 23 to 33 mN/m, and the composition has a solid content concentration of 1 to 20 mass%. A gas diffusion electrode according to the present application incudes: a conductive porous substrate; and a catalyst layer formed on a surface of the conductive porous substrate, wherein the conductive porous substrate has a critical surface tension of less than 29 mN/m, the catalyst layer includes catalyst particles having an average particle size of primary particles of 1 to 500 nm, and a binder, the catalyst layer has a thickness of 10 µm or less, and an area ratio of non-coated portions of the catalyst layer calculated by image analysis is 15% or less.

## Description

### Technical Field

The present application relates to a composition for forming a catalyst layer for forming a uniform catalyst layer on a porous substrate, and a method for producing a catalyst layer using the same, as well as a gas diffusion electrode including a uniform catalyst layer, and an electrolytic cell using the same.

### Background Art

A gas diffusion electrode for use in, for example, a fuel cell and an electrolytic cell, in which a reaction gas such as oxygen or carbon dioxide is reduced in a positive electrode, and a reaction liquid such as methanol or water is oxidized in a negative electrode, generally includes a gas diffusion layer including a gas diffusion substrate and a microporous layer formed on the gas diffusion substrate, and a catalyst layer formed on the microporous layer of the gas diffusion layer (see, e.g., Patent Document 1).

Usually, the catalyst layer of the gas diffusion electrode is formed by applying, onto the microporous layer of the gas diffusion layer, a coating material for forming a catalyst layer containing catalyst nanoparticles, and drying the coating. However, the microporous layer has many voids for maintaining gas permeability. Therefore, when the coating material for forming a catalyst layer is applied onto the microporous layer, the coating material for forming a catalyst layer infiltrates into the voids of the microporous layer, making it difficult to uniformly apply the coating material for forming a catalyst layer onto the microporous layer.

On the other hand, a gas diffusion electrode is involved in electrochemical reactions in a fuel cell, an electrolytic cell, and the like, and the catalyst layer of the gas diffusion electrode is required to have a uniform surface. If the catalyst layer has a nonuniform surface, the electrochemical reactions become nonuniform, accelerating local degradation of the catalyst layer, and thus making it difficult to stably use the fuel cell or the electrolytic cell for an extended period of time.

Here, if the voids of the microporous layer are reduced, the infiltration of the coating material for forming a catalyst layer into the voids of the microporous layer can be suppressed. However, at the same time, the gas permeability of the microporous layer is reduced.

If the coating amount of the coating material for forming a catalyst layer onto the microporous layer is increased, the coating material will not always filtrate into the voids of the microporous layer, so that the proportion of the coating material for forming a catalyst layer that remains on the surface increases. Accordingly, the uniformity of the catalyst layer formed is relatively improved. However, this method results in an increased thickness of the catalyst layer, making it impossible to form the catalyst layer as a thin film.

### Prior Art Documents

### Patent Document

[Patent Document 1] JP 2011-076848A

### Disclosure of Invention

### Problem to be Solved by the Invention

A problem that the present application is to solve is to provide a composition for forming a catalyst layer for forming a uniform catalyst layer on a porous substrate, and a method for producing a catalyst layer using the same, as well as a gas diffusion electrode including a uniform catalyst layer, and an electrolytic cell using the same.

### Means for Solving Problem

A composition for forming a catalyst layer according to the present application is a composition for forming a catalyst layer, the composition including: catalyst particles; a binder; and a solvent, wherein the catalyst particles have an average particle size of primary particles of 1 to 500 nm, the solvent has a surface tension in a range from 23 to 33 mN/m, and the composition has a solid content concentration of 1 to 20 mass%.

A method for producing a catalyst layer according to the present application includes: applying the composition for forming a catalyst layer according to the present application onto a conductive porous substrate, and drying the composition, wherein the conductive porous substrate has a critical surface tension of less than 29 mN/m, and the critical surface tension has a value smaller than the surface tension of the solvent of the composition for forming a catalyst layer.

A gas diffusion electrode according to the present application is a gas diffusion electrode including: a conductive porous substrate; and a catalyst layer formed on a surface of the conductive porous substrate, wherein the conductive porous substrate has a critical surface tension of less than 29 mN/m, the catalyst layer includes catalyst particles having an average particle size of primary particles of 1 to 500 nm, and a binder, the catalyst layer has a thickness of 10 µm or less, and an area ratio of non-coated portions of the catalyst layer calculated by image analysis is 15% or less.

An electrolytic cell according to the present application is an electrolytic cell including: a positive electrode; a negative electrode; and an ion conductive membrane disposed between the positive electrode and the negative electrode, wherein the positive electrode is the gas diffusion electrode according to the present application.

### Effects of the Invention

According to the present application, it is possible to provide a gas diffusion electrode including a uniform catalyst layer, and an electrolytic cell using the same.

### Brief Description of Drawings

[FIG. 1] FIG. 1 is a schematic cross-sectional view showing an example of a gas diffusion electrode according to an embodiment.
[FIG. 2] FIG. 2 is a schematic cross-sectional view showing an example of an electrolytic cell according to an embodiment.
[FIG. 3] FIG. 3A is an SEM image of a catalyst layer surface of Example 1, FIG. 3B is an extraction diagram of inter-particle voids obtained by image analysis of the SEM image of the catalyst layer surface of Example 1.
[FIG. 4] FIG. 4A is an SEM image of a catalyst layer surface of Example 2, and FIG. 4B is an extraction diagram of inter-particle voids obtained by image analysis of the SEM image of the catalyst layer surface of Example 2.
[FIG. 5] FIG. 5 is a cross-sectional SEM image of a gas diffusion electrode of Example 2.
[FIG. 6] FIG. 6A is a SEM image of a catalyst layer surface of Example 3, and FIG. 6B is an extraction diagram of inter-particle voids obtained by image analysis of the SEM image of the catalyst layer surface of Example 3.
[FIG. 7] FIG. 7A is a SEM image of a catalyst layer surface of Example 4, and FIG. 7B is an extraction diagram of inter-particle voids obtained by image analysis of the SEM image of the catalyst layer surface of Example 4.
[FIG. 8] FIG. 8A is a SEM image of a catalyst layer surface of Reference Example 1, and FIG. 8B is an extraction diagram of inter-particle voids obtained by image analysis of the SEM image of the catalyst layer surface of Reference Example 1.
[FIG. 9] FIG. 9 is a cross-sectional SEM image of a gas diffusion electrode of Reference Example 1.
[FIG. 10] FIG. 10A is a SEM image of a catalyst layer surface of Reference Example 2, and FIG. 10B is an extraction diagram of inter-particle voids obtained by image analysis of the SEM image of the catalyst layer surface of Reference Example 2.
[FIG. 11] FIG. 11A is a SEM image of a catalyst layer surface of Comparative Example 1, and FIG. 11B is an extraction diagram of inter-particle voids obtained by image analysis of the SEM image of the catalyst layer surface of Comparative Example 1.
[FIG. 12] FIG. 12 is a cross-sectional SEM image of a gas diffusion electrode of Comparative Example 1.

### Description of the Invention

### (Composition For Forming Catalyst layer)

An embodiment of a composition for forming a catalyst layer according to the present application will be described. The composition for forming a catalyst layer of the present embodiment includes catalyst particles, a binder, and a solvent, the catalyst particles have an average particle size of primary particles of 1 to 500 nm, the solvent has a surface tension in the range from 23 to 33 mN/m, and the composition has a solid content concentration of 1 to 20 mass%.

Since the surface tension of the solvent (dispersing medium) constituting the composition for forming a catalyst layer of the present embodiment is in the range from 23 to 33 mN/m, the wettability of the substrate with the composition is reduced when the critical surface tension of a substrate to which the composition is to be applied is smaller than the surface tension of the solvent. Even if the coating material for forming a catalyst layer is directly applied to a conductive porous substrate having a large number of voids that is used for a gas diffusion electrode of a fuel cell, an electrolytic cell, or the like, the infiltration of the coating material into the voids of the conductive porous substrate is suppressed, thus making it possible to form a catalyst layer made of a uniform thin film on the conductive porous substrate.

That is, the critical surface tension of the conductive porous substrate to which the composition for forming a catalyst layer of the present embodiment is applied is usually less than 29 mN/m. Therefore, as the composition for forming a catalyst layer including the solvent having a surface tension in the range from 23 to 33 mN/m, a conductive porous substrate that has a critical surface tension smaller than the surface tension of the solvent and is less wettable with the composition can be selected as appropriate. Accordingly, even if the composition is directly applied to a conductive porous substrate having a large number of voids, the infiltration of the coating material for forming a catalyst layer into the voids of the conductive porous substrate is suppressed, so that a catalyst layer made of a uniform thin film can be easily formed on the conductive porous substrate.

On the other hand, if the surface tension of the solvent of the composition for forming a catalyst layer is reduced to be less than 23 mN/m, not only the solvents that can be used, but also the conductive porous substrates that can be used are limited. Therefore, the surface tension of the solvent is adjusted to be 23 mN/m or more.

When the surface tension of the solvent of the composition for forming a catalyst layer is greater than 33 mN/m, it is difficult to uniformly apply the composition to the conductive porous substrate. Therefore, the surface tension of the solvent is adjusted to be 33 mN/m or less.

Note that, even if the surface tension of the solvent of the composition for forming a catalyst layer is in the range from 23 to 33 mN/m, an excessive increase in the difference between the surface tension of the solvent and the critical surface tension of the conductive porous substrate will result in an excessive reduction in the wettability of the substrate with the composition, thus making it difficult to uniformly apply the coating material for forming a catalyst layer onto the surface of the conductive porous substrate. Therefore, the difference between the surface tension of the solvent and the critical surface tension of the conductive porous substrate: (Surface Tension of Solvent) - (Critical Surface Tension of Conductive Porous Substrate) is preferably 6 mN/m or less, and more preferably 4 mN/m or less.

As the surface tension of the solvent, if there is a literature value, the literature value can be employed. If there is no literature value, the surface tension can be measured by the pendant drop method, the plate method, the ring method, or the like. A pendant drop method is a method in which a drop of liquid is suspended from the tip of a vertically placed narrow tube, and the surface tension of the liquid is calculated by analyzing the shape of the largest pendant drop that does not fall. The plate method is a method in which a platinum plate is immersed in a liquid, and the surface tension of the liquid is calculated by measuring the force by which the plate is pulled in by the liquid at that time. The ring method is a method in which a ring is immersed in a liquid, subsequently the ring is gradually drawn up, and the surface tension of the liquid is calculated by measuring the force with which the liquid pulls in the ring at the moment at which a film formed between the ring and the liquid surface breaks.

Since the above-described composition for forming a catalyst layer includes catalyst particles having an average particle size of primary particles of 1 to 500 nm, it is possible to increase the surface area of the catalyst particles, thus forming a catalyst layer having many active surfaces. The primary particle size of the catalyst particles can be measured from an image measured with a scanning electron microscope (SEM) or the like, and the average value for 200 particles, for example, can be used as the average particle size.

It is necessary that the above-described composition for forming a catalyst layer has a solid content concentration of 1 to 20 mass%. When the aforementioned solid content concentration exceeds 20 mass%, it is necessary to finely adjust the application gap in the application step of the composition for forming a catalyst layer, making it difficult to form a catalyst layer in the form of a thin film using a continuous application method. On the other hand, when the solid content concentration falls below 1 mass%, the amount of the solvent of the composition for forming a catalyst layer is increased, and the composition for forming a catalyst layer (coating material) is likely to infiltrate into the voids of the conductive porous substrate even if the surface tension of the solvent is set in the range from 23 to 33 mN/m, as described above. Accordingly, it is difficult to form a catalyst layer made of a uniform thin film on the conductive porous substrate.

The above-described catalyst particles can be composed of a metal or a metal oxide including at least one element selected from the group consisting of copper (Cu), tin (Sn), manganese (Mn), iron (Fe), nickel (Ni), titanium (Ti), cobalt (Co), zinc (Zn), indium (In), molybdenum (Mo), tungsten (W), yttrium (Y), zirconium (Zr), palladium (Pd), gold (Au), silver (Ag), ruthenium (Ru), rhodium (Rh), platinum (Pt), cerium (Ce), iridium (Ir), and bismuth (Bi).

As the binder, at least one selected from the group consisting of polyperfluorocarbon sulfonic acid, polystyrene, polyether ketone, polyether ether ketone, polysulfone, polyether sulfone, polyvinylidene fluoride, polytetrafluoroethylene, polyacrylic acid, and polyimide can be used. The binder may be selected according to the compatibility with the substrate to which the composition for forming a catalyst layer is to be applied, as well as the catalyst particles, the solvent, and the like that are to be used together with the binder.

As the solvent, at least one selected from the group consisting of isopropanol, 2-isopropoxy ethanol, methoxy propanol, butyl propylene diglycol, isobutyl diglycol, dimethyl diglycol, propylene glycol, methyl propylene triglycol, butyl diglycol, methyl glycol, propyl propylene diglycol, isopropyl diglycol, benzyl glycol, benzyl diglycol, phenyl glycol, and ethylene glycol can be used.

### (Method For Producing Catalyst Layer)

An embodiment of a method for producing a catalyst layer according to the present application will be described. The method for producing a catalyst layer of the present embodiment includes: applying the above-described composition for forming a catalyst layer according to the present application onto a conductive porous substrate, and drying the composition, wherein the conductive porous substrate has a critical surface tension of less than 29 mN/m, and the critical surface tension has a value smaller than the surface tension of the solvent of the composition for forming a catalyst layer.

The method for producing a catalyst layer of the present embodiment includes the step of applying the above-described composition for forming a catalyst layer according to the present application, that is, a composition for forming a catalyst layer including a solvent (one solvent alone or a mixture of two or more solvents) having a surface tension in the range from 23 to 33 mN/m onto a conductive porous substrate having a critical surface tension of less than 29 mN/m and having a value of the critical surface tension that is smaller than the surface tension of the solvent, and drying the composition. Accordingly, as described above, even if the coating material for forming a catalyst layer is directly applied to a conductive porous substrate having a large number of voids that is used for a gas diffusion electrode of a fuel cell, an electrolytic cell, or the like, the infiltration of the coating material into the voids of the conductive porous substrate is suppressed, thus making it possible to form a catalyst layer made of a uniform thin film on the conductive porous substrate.

That is, the critical surface tension is a surface tension of a liquid capable of completely wetting a solid surface (forming a contact angle of 0°). When the composition for forming a catalyst layer including a solvent having a larger surface tension than the critical surface tension of the conductive porous substrate is applied to the above-described conductive porous substrate, the composition for forming a catalyst layer is less likely to wet the conductive porous substrate. Therefore, even if the coating material for forming a catalyst layer is directly applied to a conductive porous substrate having a large number of voids, the infiltration of the coating material into the voids of the conductive porous substrate is suppressed, thus making it possible to form a catalyst layer made of a uniform thin film on the conductive porous substrate.

The above-described critical surface tension is measured by a method compliant with JIS K 6768, in which method, using several kinds of known liquids having different surface tensions, the contact angle (θ) between a film composed of the above-described conductive porous substrate and each of the liquids is measured, and cosθ is plotted against the surface tension, and the critical surface tension can be determined from the point at which cosθ = 1. As the known liquids having different surface tensions, it is possible to use, for example, water (73.0 mN/m), formamide (58.0 mN/m), ethylene glycol monoethylether (30.0 mN/m), and methanol (22.6 mN/m), as well as the mixed solution of the liquids described in JIS K 6768.

In the method for producing a catalyst layer of the present embodiment, the application of the above-described composition for forming a catalyst layer onto the conductive porous substrate can be performed by a bar coating method or a spin coating method, for example. When a conventional composition for forming a catalyst layer is applied onto a conductive porous substrate by a bar coating method or a spin coating method, the coating material for forming a catalyst layer infiltrates into the voids of the conductive porous substrate, making it difficult to form a catalyst layer made of a uniform thin film on the conductive porous substrate. Moreover, the infiltration of the coating material for forming a catalyst layer into the voids of the conductive porous substrate may also make the application itself difficult. However, the method for producing a catalyst layer of the present embodiment uses the composition for forming a catalyst layer according to the present application. Accordingly, even if the composition for forming a catalyst layer is directly applied to the conductive porous substrate by a bar coating method or a spin coating method, the infiltration of the coating material for forming a catalyst layer into the voids of the conductive porous substrate is suppressed, thus making it possible to form a catalyst layer made of a uniform thin film on the conductive porous substrate.

In particular, when the application of the composition for forming a catalyst layer onto the conductive porous substrate is performed by a bar coating method, there is less catalyst particle aggregation even in a micro region, so that a thin film made of catalyst nanoparticles can be uniformly formed on the conductive porous substrate.

On the other hand, when the application of the composition for forming a catalyst layer onto the conductive porous substrate is performed by a spray coating method, unevenness of the coated surface, which is due to droplets of a spray coating liquid, is more likely to occur as compared with a bar coating method or a spin coating method. That is, although depending on the device used, the coating amount (spray amount) of the spray coating liquid is small, and it is therefore difficult to suppress aggregation of catalyst particles in micro regions especially when forming a thin film, so that it may be difficult to ensure evenness. Accordingly, especially in the case of forming a thin catalyst layer, it is preferable to use a bar coating method or a spin coating method.

Preferably, the above-described conductive porous substrate has a contact angle with the above-described composition for forming a catalyst layer, of 15 to 130°. When the aforementioned contact angle is within this range, the infiltration of the coating material for forming a catalyst layer into the voids of the conductive porous substrate can be reliably suppressed even if the above-described composition for forming a catalyst layer is directly applied to the conductive porous substrate having a large number of voids, so that it is possible to form a catalyst layer made of a uniform thin film on the conductive porous substrate.

When the above-described contact angle falls below 15°, the coating material for forming a catalyst layer is likely to infiltrate into the voids of the conductive porous substrate, so that the flowability of the coating material is reduced after an elapse of a short period of time, making it difficult to form a uniform coating film. On the other hand, when the above-described contact angle exceeds 130°, the wettability of the coating material for the conductive porous substrate is excessively reduced, and the coating material may be repelled, resulting in a non-coated portion.

As the above-described conductive porous substrate, it is possible to use a porous film including conductive particles having an average particle size of 10 to 100 nm, and a binder. The conductive porous substrate will be described in detail later in the description of a gas diffusion electrode according to the present application.

Preferably, the drying temperature of the above-described composition for forming a catalyst layer in the method for producing a catalyst layer of the present embodiment is 25 to 180°C. When the aforementioned drying temperature falls below 25°C, the amount of an organic solvent that exceeds the permissible amount may remain in the formed catalyst layer. In a case where the catalyst layer in which the amount of an organic solvent that exceeds the permissible amount remains is used as an electrode of a fuel cell, an electrolytic cell, or the like, unwanted side reactions are caused, and reaction products thereof are attached to the catalyst particles, leading to deactivation of the catalyst particles, and an increase in the resistance. On the other hand, when the drying temperature exceeds 180°C, the binder used for the composition for forming a catalyst layer may degenerate. Therefore, more preferably, the above-described drying temperature is a low temperature of 150°C or less, and drying is performed under a vacuum condition in which the entry and exit of oxygen are minimized.

### (Gas Diffusion Electrode)

An embodiment of a gas diffusion electrode according to the present application will be described. The gas diffusion electrode according to the present includes: a conductive porous substrate; and a catalyst layer formed on a surface of the conductive porous substrate, wherein the conductive porous substrate has a critical surface tension of less than 29 mN/m, the catalyst layer includes catalyst particles having an average particle size of primary particles of 1 to 500 nm, and a binder, the catalyst layer has a thickness of 10 µm or less, and an area ratio of non-coated portions of the catalyst layer calculated by image analysis is 15% or less.

The gas diffusion electrode of the present embodiment is involved in electrochemical reactions in a fuel cell, an electrolytic cell, and the like, and the catalyst layer of the gas diffusion electrode is required to have a uniform surface. If the catalyst layer has a nonuniform surface, the electrochemical reactions become nonuniform, accelerating local degradation of the catalyst layer, and thus making it difficult to stably use the fuel cell or the electrolytic cell for an extended period of time.

In this respect, in the gas diffusion electrode of the present embodiment, the catalyst layer has a thickness of 10 µm or less, and the area ratio of non-coated portions of the catalyst layer calculated by image analysis is 15% or less. Therefore, the gas diffusion electrode can include a catalyst layer made of a uniform thin film on the conductive porous substrate. Accordingly, the electrochemical reactions become uniform, and the local degradation of the catalyst layer can be suppressed, thus making it possible to stably use the fuel cell and the electrolytic cell for an extended period of time.

The area ratio of the non-coated portions of the catalyst layer can be calculated by image analysis using image analysis software "ImageJ". A specific method for measuring the area ratio of the non-coated portions of the catalyst layer will be described in the examples discussed later.

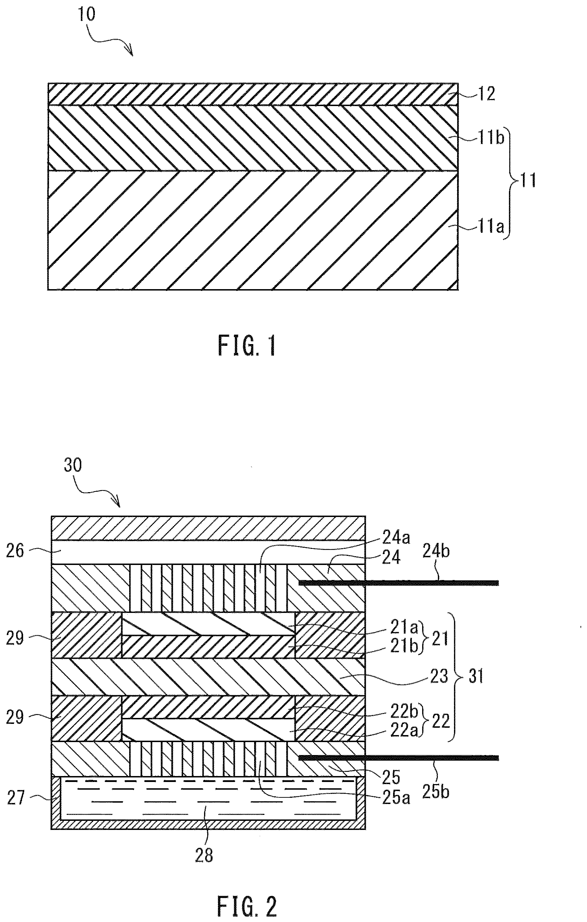

Next, an embodiment of the gas diffusion electrode according to the present application will be described with reference to the drawings. FIG. 1 is a schematic cross-sectional view showing an example of the gas diffusion electrode according to the present embodiment. In FIG. 1, a gas diffusion electrode 10 includes: a gas diffusion layer 11 in which a gas diffusion substrate 11a, and a conductive porous substrate 11b formed on the gas diffusion substrate 11a are stacked; and a catalyst layer 12 formed on the conductive porous substrate 11b of the gas diffusion layer 11.

### <Gas Diffusion Layer>

The gas diffusion layer 11 is composed of the gas diffusion substrate 11a and the conductive porous substrate 11b, and has high gas permeability in order to supply a reaction gas to the catalyst layer 12.

### [Conductive Porous Substrate]

As the above-described conductive porous substrate, it is possible to use a porous film (nanoparticle-dispersed porous film) including conductive particles (nanoparticles) having an average particle size of 10 to 100 nm, and a binder. The conductive porous substrate corresponds to the microporous layer described in Patent Document 1, and is formed on one side of the gas diffusion substrate in order to impart shielding properties against a reaction liquid to the gas diffusion layer. The conductive porous substrate also functions as a substrate for holding the above-described catalyst layer.

Although the conductive porous substrate can be composed of a fibrous material, a non-woven fabric, or the like as long as the gas permeability can be ensured, it is preferable to use the above-described nanoparticle-dispersed porous film. The reason is that, with the use of the above-described nanoparticle-dispersed porous film containing nanoparticles, fine pores can be easily produced inside the substrate due to the shape and the inter-particle distance of the nanoparticles, and the critical surface tension of the conductive porous substrate can be easily set to less than 29 mN/m.

In the case where an aqueous solution containing an electrolyte is used as the reaction liquid, it is preferable that the critical surface tension of the conductive porous substrate is set to less than 23 mN/m in order to ensure sufficient repellency to the reaction liquid.

In order to achieve good gas permeability, it is preferable that the conductive porous substrate has an average pore diameter of 0.1 to 1 µm. In order to improve the gas permeability, the porosity of the conductive porous substrate is also preferably 30 to 70 vol%, and more preferably 50 to 70 vol%. The average pore diameter and the porosity can be measured by mercury intrusion porosimetry using a mercury porosimeter.

The thickness of the conductive porous substrate is not particularly limited, but is usually set to about 1 to 100 µm, since an excessively thin thickness results in a reduction in the shielding properties against the reaction liquid.

The conductive particles constituting the conductive porous substrate are used to impart conductivity to the conductive porous substrate. In view of the electron conductivity, the electrochemical stability, and the like, it is possible to use carbon particles, including, for example, carbon black such as channel black, furnace black, Ketjen black, acetylene black, and lamp black; graphite; activated carbon; carbon nanohorns; and carbon nanotubes; and conductive metal oxides such as ITO and ATO as the conductive particles. Most preferred are carbon particles. Conductive metal oxides such as ITO and ATO are soluble to an alkaline solution and an acidic aqueous solution, and therefore can be used only if the reaction liquid used is neutral.

The above-described conductive particles have an average particle size of 10 to 100 nm. The average particle size of the conductive particles can be measured using, for example, a particle size distribution measurement device "LA-920" manufactured by HORIBA, Ltd.

As the binder constituting the conductive porous substrate, it is preferable to use, for example, polyvinylidene fluoride (PVDF), polytetrafluoroethylene (PTFE), polystyrene, polyether ketone, polyether ether ketone, polysulfone, polyether sulfone, polyacrylic acid, polyimide, and the like. In order to impart repellency to the conductive porous substrate, fluorocarbon resins such as PVDF and PTFE are preferred.

### [Gas Diffusion Substrate]

The gas diffusion substrate is used to impart gas permeability, which is a primary function of the gas diffusion layer, to the gas diffusion layer, and is also used as a substrate for holding the above-described conductive porous substrate. Therefore, the gas diffusion substrate may be any substrate that has excellent mechanical durability and excellent gas permeability, and is compatible with the conductive porous substrate, and need not necessarily have conductivity. However, it is preferable that the gas diffusion substrate also has conductivity because current can be collected from the gas diffusion substrate in the case of stacking the catalyst layer on the gas diffusion layer and using this structure as a gas diffusion electrode. Therefore, the gas diffusion substrate is preferably formed of a porous conductive material. Specifically, a carbon non-woven fabric, carbon paper, and the like can be used as the gas diffusion substrate.

The thickness of the gas diffusion substrate is not particularly limited, but is usually set to about 100 to 300 µm, for example.

Although the method for producing the gas diffusion layer is not particularly limited, a gas diffusion layer with a conductive porous substrate corresponding to the above-described microporous layer disposed on one side of the above gas diffusion substrate can be formed by applying, onto the gas diffusion substrate, a composition (e.g., a coating material made of a paste, a slurry, or the like) including the above-described conductive particles, and the above-described binder, and drying the composition.

In order to disperse the conductive particles and the binder, it is possible to add a solvent to the aforementioned composition used for the production of the gas diffusion layer. The solvent is not particularly limited as long as the solvent can sufficiently disperse the components, and it is possible to use, for example, N-methyl-2-pyrrolidone (NMP), methanol, ethanol, water, and the like.

The method for applying the above composition is also not particularly limited, and it is possible to use, for example, a bar coater, a knife coater, a blade coater, a dip coater, a spin coater, a roll coater, a die coater, and the like.

The coating amount of the above composition when the composition is applied to the gas diffusion substrate is not particularly limited, and may be, for example, 0.8 to 3.0 mg/cm² in terms of solid content.

The drying temperature and the drying time after the above composition has been applied are not particularly limited. For example, vacuum drying may be performed for 1 to 10 hours at a temperature of about 90 to 200°C.

### <Catalyst Layer>

The catalyst layer 12 includes catalyst particles having an average particle size of primary particles of 1 to 500 nm, and a binder. As the catalyst particles and the binder that constitute the catalyst layer 12, the same catalyst particles and binder as those described in the previously discussed embodiment of the composition for forming a catalyst layer according to the present application can be used.

Although the thickness of the catalyst layer is 10 µm or less, the thickness of the catalyst layer is preferably 0.1 µm or more, because the catalytic function may not be achieved when the thickness of the catalyst layer is too small.

The area ratio of the non-coated portions of the catalyst layer calculated by image analysis is 15% or less, and ideally, the area ratio of the non-coated portions is preferably 0%. However, in view of analytical errors, it is actually difficult to achieve an area ratio of 0%, and the lower limit is usually about 1%.

The content of the binder in the catalyst layer may be 2 to 100 parts by mass, per 100 parts by mass of the catalyst material.

The method for producing the catalyst layer is not particularly limited. However, since the critical surface tension of the conductive porous substrate is less than 29 mN/m, it is preferable that the catalyst layer is produced by the above-described method for producing a catalyst layer according to the present application, using the above-described composition for forming a catalyst layer according to the present application. Doing so allows the coating material for forming a catalyst layer to be applied onto the conductive porous substrate having a large number of voids without infiltrating into the voids as previously described, and it is thus possible to form a catalyst layer made of a uniform thin film on the conductive porous substrate. More specifically, the thickness of the catalyst layer is 10 µm or less, and the area ratio of the non-coated portions of the catalyst layer calculated by image analysis, can be 15% or less.

### (Electrolytic Cell)

An embodiment of an electrolytic cell according to the present application will be described. The electrolytic cell according to the present embodiment includes a positive electrode, a negative electrode, and an ion conductive membrane disposed between the positive electrode and the negative electrode, and uses the gas diffusion electrode according to the present application as the positive electrode.

The electrolytic cell of the present embodiment uses the above-described gas diffusion electrode according to the present application as the positive electrode, and therefore includes a catalyst layer made of a uniform thin film on the conductive porous substrate. Accordingly, electrochemical reactions become uniform, and the local degradation of the catalyst layer can be suppressed, thus making it possible to stably use the electrolytic cell for an extended period of time.

In the following, constituent members of the electrolytic cell of the present embodiment will be described. Since the gas diffusion electrode according to the present application is used as the positive electrode, the description thereof has been omitted.

### <Negative Electrode>

The negative electrode functions as an oxidation electrode that oxidizes water to produce oxygen, and includes a gas diffusion layer and a negative electrode catalyst layer. However, the negative electrode may be composed only of the negative electrode catalyst layer. The gas diffusion layer can be composed of a porous electron conductive material or the like, and it is possible to use, for example, a carbon non-woven fabric, a carbon paper, and the like.

The negative electrode catalyst layer can be formed of a catalyst material, a conductive material, and a binder. As the catalyst material used for the negative electrode catalyst layer, it is possible to use, for example, metal fine particles of platinum (Pt), palladium (Pd), or the like.

The conductive material is not particularly limited, but is preferably carbon material powder having a high specific surface area, such as carbon black, activated carbon, carbon nanohorns, and carbon nanotubes, in view of the electron conductivity, the electrochemical stability, and the like.

In order to increase the catalytic activity, the particle size of the metal fine particles used for the negative electrode catalyst material is preferably 1 to 50 nm. In addition, the negative electrode catalyst material is preferably carried on the surface of the above-described conductive material powder. The reason is that the electron conductivity of the negative electrode catalyst material is improved. The content of the negative electrode catalyst material in the conductive material carrying the negative electrode catalyst material is not particularly limited, but may be, for example, 10 to 500 parts by mass per 100 parts by mass of the conductive material.

As the above-described binder, the same binder as that used for the catalyst layer of the positive electrode (the previously described gas diffusion electrode according to the present application) can be used. The content of the binder in the negative electrode catalyst layer may be 2 to 100 parts by mass per 100 parts by mass of the negative electrode catalyst material.

The above-described negative electrode catalyst layer can be formed, for example, by producing a catalyst coating material including a carrier in which a catalyst material is carried on a conductive material, a binder, and a solvent, and applying the catalyst coating material onto a negative electrode gas diffusion layer, followed by removing the solvent.

### <Ion Conductive Membrane>

As the ion conductive membrane, a cation exchange membrane can be used. Preferably, the cation exchange membrane includes a proton conductive organic material such as polyperfluorocarbon sulfonic acid, polystyrene, polyether ketone, polyether ether ketone, polysulfone, and polyether sulfone. The reason is that these organic materials can be formed in a cross-linked structure or be partially fluorinated, thus enhancing the material stability. In particular, polyperfluorocarbon sulfonic acid that exhibits good proton conductivity in a wet state is preferred as the proton conductive organic material.

As the ion conductive membrane, an anion exchange membrane can also be used. The anion exchange membrane can be formed, for example, by hydrotalcite or the like that is selectively permeable to anions (OH⁻). As the anion exchange membrane, it is also possible to use a membrane in which a polymer is used as a matrix, and metal compound particles are dispersed in the matrix.

Next, an embodiment of an electrolytic cell according to the present application will be described with reference to the drawings. FIG. 2 is a schematic cross-sectional view showing an example of an electrolytic cell for carbon dioxide according to the present embodiment. In FIG. 2, an electrolytic cell 30 includes a membrane electrode assembly 31, and the membrane electrode assembly 31 is composed of a positive electrode 21, a negative electrode 22, and an ion conductive membrane 23. Note, however, that FIG. 2 is a schematic cross-sectional view for facilitating the understanding of the drawing, and therefore the thickness ratio between the members constituting the electrolytic cell may differ from the actual ratio.

The positive electrode 21 includes a gas diffusion layer 21a and a catalyst layer 21b. The previously described gas diffusion electrode according to the present application is used as the positive electrode 21, and therefore the gas diffusion layer 21a is composed of a conductive porous substrate and a gas diffusion substrate. However, the differentiation between these substrates has been omitted in FIG. 2. Although the negative electrode 22 includes a gas diffusion layer 22a and a catalyst layer 22b, the negative electrode 22 may be composed only of the catalyst layer 22b.

The electrolytic cell 30 includes current collector plates 24 and 25 on the outer side of the gas diffusion layer 21a of the positive electrode 21 and the gas diffusion layer 22a of the negative electrode 22, respectively. Holes 24a for taking in a reaction gas (gas containing carbon dioxide) are formed in the current collector plate 24 on the positive electrode 21 side, and a lead body 24b is further connected to the current collector plate 24. In addition, a reaction gas flow path 26 is provided on the outer side of the current collector plate 24.

Holes 25a for taking in an electrolytic solution are formed in the current collector plate 25 on the negative electrode 22 side, and a lead body 25b is further connected to the current collector plate 25. In addition, an electrolytic solution container 27 is provided on the outer side of the current collector plate 25, and the electrolytic solution container 27 is filled with an electrolytic solution 28.

As the aforementioned electrolytic solution, an aqueous solution containing an electrolyte is used, and examples of the electrolyte include hydroxide ions (OH⁻), hydrogen ions (H⁺), potassium ions (K⁺), sodium ions (Na⁺), chloride ions (Cl⁻), bromide ions (Br⁻), iodide ions (I⁻), nitrate ions (NO₃⁻), sulfate ions (SO₄²⁻), phosphate ions (PO₄²⁻), hydrogen carbonate ions (HCO₃⁻), and carbonate ions (CO₃²⁻).

The current collector plates 24 and 25 can be composed of, for example, noble metal such as platinum or gold, anti-corrosive metal such as stainless steel, or a carbon material or the like. To improve the corrosion resistance, the surfaces of these materials may be subjected to plating or coating.

The membrane electrode assembly 31 is sandwiched between the current collector plates 24 and 25 and sealed with a sealing material 29, thus forming the electrolytic cell 30.

In FIG. 2, when current is supplied between the negative electrode 22 and the positive electrode 21, an oxidation reaction of water (H₂O) represented by 2H₂O→4H⁺+O₂+4e⁻ takes place in the negative electrode 22, whereby protons H⁺ and electrons e⁻ are produced. The protons H⁺ are transferred to the positive electrode 21 through the ion conductive membrane 23. On the other hand, in the positive electrode 21, the protons H⁺ and the electrons e⁻ from the negative electrode 22 cause the following reduction reaction of carbon dioxide (CO₂), whereby carbon compounds such as carbon monoxide (CO), methane (CH₄), or ethylene (C₂H₄) are produced.

2CO₂+4H⁺+4e⁻→2CO+2H₂O

CO+6H⁺+6e⁻→CH₄+H₂O

2CO+8H⁺+8e⁻→C₂H₄+2H₂O

### EXAMPLES

Hereinafter, the present application will be described by way of examples. However, the present application is not limited to the following examples.

### (Example 1)

### <Production Of Coating Material For Forming Conductive Porous Substrate>

Carbon black (CB, average particle size: 50 nm) as conductive particles, a dispersion (solid content concentration: 60%) of polytetrafluoroethylene (PTFE) as a binder resin, ion exchanged water as a solvent, and polyoxyethylene (10) octyl phenyl ether (OPE) as a surfactant were prepared. Next, the aforementioned components were mixed at a mass ratio of CB:PTFE dispersion:ion exchanged water:OPE = 1:0.3:12:0.1, to produce a coating material for forming a conductive porous substrate.

### <Production of Gas Diffusion Layer>

As a gas diffusion substrate of a gas diffusion layer, a carbon non-woven fabric having a thickness of 205 µm and a porosity of 83% was prepared. Next, the produced coating material for forming a conductive porous substrate was applied to one side of the carbon non-woven fabric, then dried, and fired for 1 hour under a nitrogen atmosphere of 360°C, thereby producing a gas diffusion layer in which a conductive porous substrate was stacked on the carbon non-woven fabric. The fired conductive porous substrate had a thickness of 15 µm, an average pore diameter of 0.25 µm, a porosity of 44.5 vol%, and a critical surface tension of 22.6 mN/m.

### <Production Of Coating Material For Forming Catalyst Layer>

Copper particles (Cu, average particle size: 25 nm) as catalyst particles, a 5 mass% Nafion dispersion solution as a binder resin, methoxy propanol (PGM, surface tension: 23.5 mN/m) as a solvent were prepared. Next, the above-described components were mixed at a mass ratio of Cu:5 mass% Nafion dispersion solution:PGM = 3:5:55, to produce a coating material for forming a catalyst layer. The produced coating material for forming a catalyst layer had a solid content concentration of 5 mass%, and the contact angle of the coating material for forming a catalyst layer with the conductive porous substrate was 42.1°.

### <Production Of Gas Diffusion Electrode>

The produced coating material for forming a catalyst layer was applied, using a bar coater at a coating amount of 0.2 mg/cm², to the surface of the conductive porous substrate of the gas diffusion layer, to produce a gas diffusion electrode of Example 1.

### <Calculation Of Area Ratio Of Non-Coated Portion Of Catalyst Layer By Image Analysis>

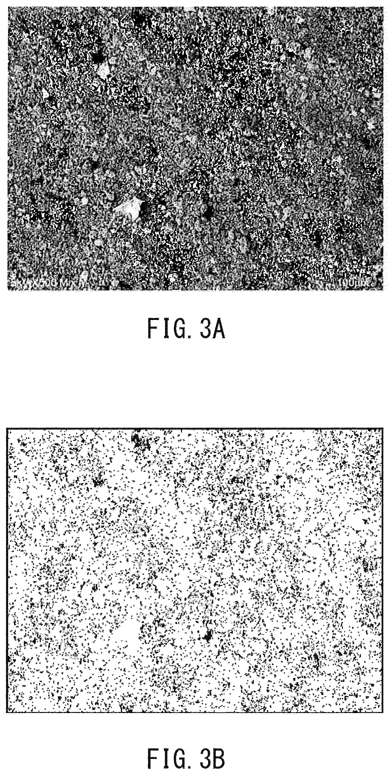

First, a SEM image of the surface of the catalyst layer of the produced gas diffusion electrode was captured with a scanning electron microscope (SEM). FIG. 3Ashows the SEM image.

Next, the captured SEM image was subjected to image analysis using image analysis software "ImageJ" according to the following procedure.
(1) The SEM image was classified into particle existing portions and particle non-existing portions by binarization, and converted into a binary representation, with a value of 0 assigned to the particle existing portions, and a value of 255 assigned to the particle non-existing portions.
(2) Using the function of Analyze Particles, the area of each of the regions of the particle non-existing portions is measured for all the regions within the field of view. The upper and lower limits of the area are not limited, and all sizes from 0 to infinity are measured. At this time, minute gaps (in this case, particles scattered, in some rare cases, in a region that can be roughly determined as a non-coated portion) in a single region are not counted, and therefore the setting "include holes" is enabled.
(3) The results of measurement by the above-described image analysis are shown in FIG. 3B as an extraction diagram of inter-particle voids.

Thereafter, using tabulation software such as Excel, all the counted non-coated portions are tabulated, to obtain an area distribution map of the non-coated portions. The area ratio of the non-coated portions of the catalyst layer determined from the area distribution map was 4.63%.

The thickness of the catalyst layer measured from a cross-sectional SEM image of the produced gas diffusion electrode was 0.4 to 1.1 µm. As can be seen from the cross-sectional SEM image, in the gas diffusion electrode of the present example, the catalyst layer was smoothly formed, and uneven coating of the catalyst layer has not occurred. Moreover, immersion of the coating material for forming a catalyst layer in the conductive porous substrate was not observed.

### (Example 2)

A coating material for forming a catalyst layer was produced in the same manner as in Example 1 except that the solid content concentration of the coating material for forming a catalyst layer was changed to 18 mass%, and a gas diffusion electrode of Example 2 was produced in the same manner as in Example 1 except that the coating amount of the coating material for forming a catalyst layer onto the surface of the conductive porous substrate was changed to 1.7 mg/cm².

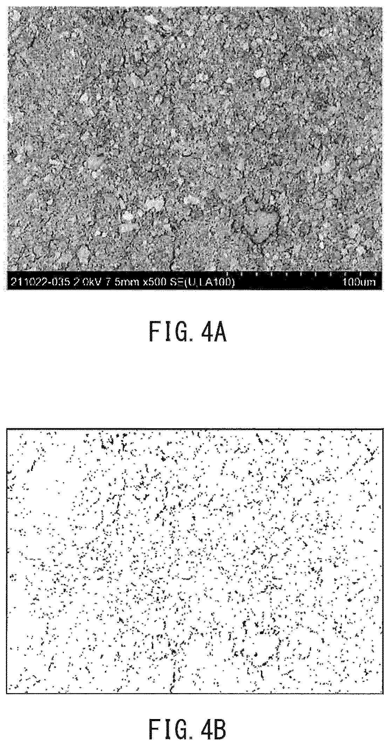

FIG. 4A shows a SEM image of the surface of the catalyst layer of the produced gas diffusion electrode, and FIG. 4B shows an extraction diagram of inter-particle voids as the results of measurement by image analysis performed in the same manner as in Example 1. The area ratio of the non-coated portions of the catalyst layer determined in the same manner as in Example 1 was 0.11%.

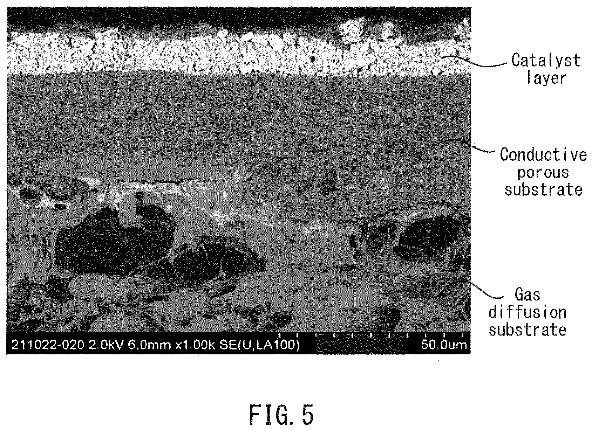

FIG. 5 shows a cross-sectional SEM image of the produced gas diffusion electrode. The thickness of the catalyst layer measured from FIG. 5 was 8.0 to 8.5 µm. As can be seen from FIG. 5, in the gas diffusion electrode of the present example, the catalyst layer was smoothly formed, and uneven coating of the catalyst layer has not occurred. Moreover, immersion of the coating material for forming a catalyst layer in the conductive porous substrate was not observed.

### (Example 3)

A coating material for forming a catalyst layer was produced in the same manner as in Example 1 except that the solvent of the coating material for forming a catalyst layer was changed to propylene glycol (PG, surface tension: 25.6 mN/m), and the solid content concentration thereof was changed to 10 mass%. The contact angle of the produced coating material for forming a catalyst layer with the conductive porous substrate was 125.8°.

A gas diffusion electrode of Example 3 was produced in the same manner as in Example 1 except for using this coating material for forming a catalyst layer.

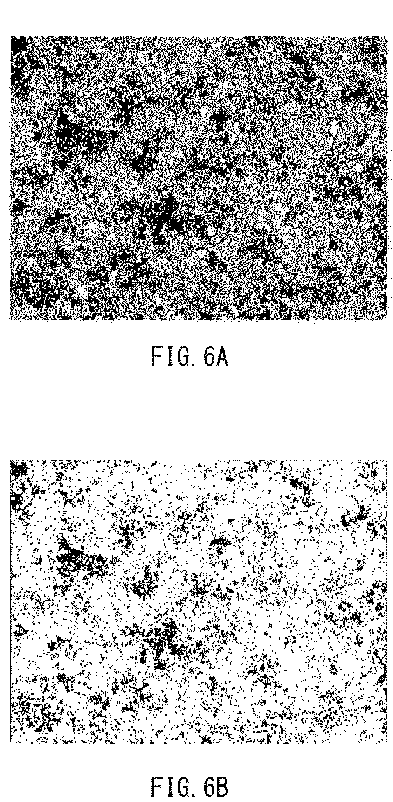

FIG. 6A shows a SEM image of the surface of the catalyst layer of the produced gas diffusion electrode, and FIG. 6B shows an extraction diagram of inter-particle voids as the results of measurement by image analysis performed in the same manner as in Example 1. The area ratio of the non-coated portions of the catalyst layer determined in the same manner as in Example 1 was 12.85%.

The thickness of the catalyst layer measured from a cross-sectional SEM image of the produced gas diffusion electrode was 0.7 to 2.0 µm. As can be seen from the cross-sectional SEM image, in the gas diffusion electrode of the present example, the catalyst layer was smoothly formed, and uneven coating of the catalyst layer has not occurred. Moreover, immersion of the coating material for forming a catalyst layer in the conductive porous substrate was not observed.

### (Example 4)

A coating material for forming a catalyst layer was produced in the same manner as in Example 1 except that the solvent of the coating material for forming a catalyst layer was changed to methyl glycol (MG, surface tension: 26.6 mN/m), and the solid content concentration thereof was changed to 8 mass%. The contact angle of the produced coating material for forming a catalyst layer with the conductive porous substrate was 52.0°.

A gas diffusion electrode of Example 4 was produced in the same manner as in Example 1 except for using this coating material for forming a catalyst layer.

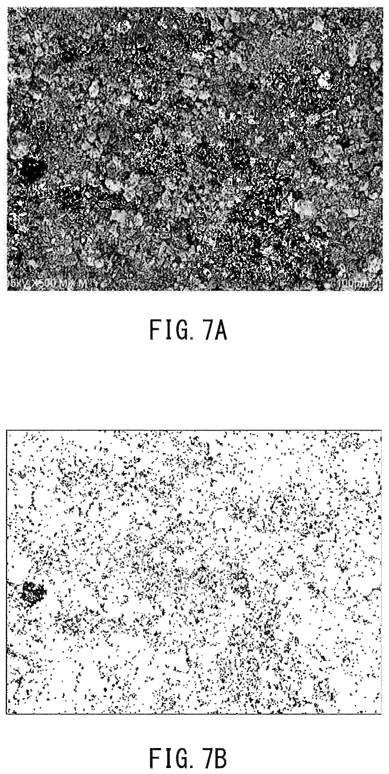

FIG. 7A shows a SEM image of the surface of the catalyst layer of the produced gas diffusion electrode, and FIG. 7B shows an extraction diagram of inter-particle voids as the results of measurement by image analysis performed in the same manner as in Example 1. The area ratio of the non-coated portions of the catalyst layer determined in the same manner as in Example 1 was 4.57%.

The thickness of the catalyst layer measured from a cross-sectional SEM image of the produced gas diffusion electrode was 0.4 to 1.2 µm. As can be seen from the cross-sectional SEM image, in the gas diffusion electrode of the present example, the catalyst layer was smoothly formed, and uneven coating of the catalyst layer has not occurred. Moreover, immersion of the coating material for forming a catalyst layer in the conductive porous substrate was not observed.

### (Reference Example 1)

A coating material for forming a catalyst layer was produced in the same manner as in Example 1, and a gas diffusion electrode of Reference Example 1 was produced in the same manner as in Example 1 except that the coating material for forming a catalyst layer was applied, using a spray coater at a coating amount of 1.5 mg/cm², to the surface of the conductive porous substrate of the gas diffusion layer produced in the same manner as in Example 1.

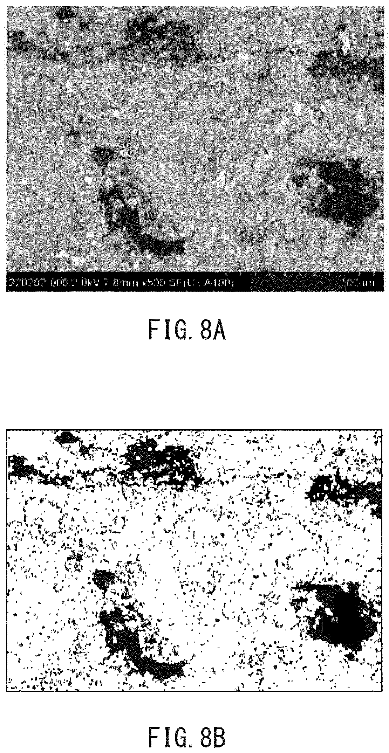

FIG. 8A shows a SEM image of the surface of the catalyst layer of the produced gas diffusion electrode, and FIG. 8B shows an extraction diagram of inter-particle voids as the results of measurement by image analysis performed in the same manner as in Example 1. The area ratio of the non-coated portions of the catalyst layer determined in the same manner as in Example 1 was 17.02%.

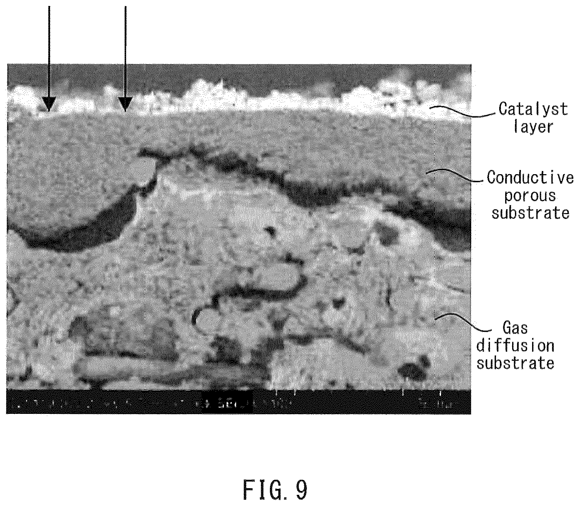

FIG. 9 shows a cross-sectional SEM image of the produced gas diffusion electrode. The thickness of the catalyst layer measured from FIG. 9 was 5 to 11 µm. As can be seen from FIG. 9, in the gas diffusion layer of the present reference example, immersion of the coating material for forming a catalyst layer in the conductive porous substrate was not observed. However, the catalyst layer was not formed on the portion indicated by the arrows in the drawing, demonstrating that uneven coating of the catalyst layer has occurred.

### (Reference Example 2)

A coating material for forming a catalyst layer was produced in the same manner as in Example 1, and a gas diffusion electrode of Reference Example 2 was produced in the same manner as in Example 1 except that the coating material for forming a catalyst layer was applied, using a spray coater at a coating amount of 0.2 mg/cm², to the surface of the conductive porous substrate of the gas diffusion layer produced in the same manner as in Example 1.

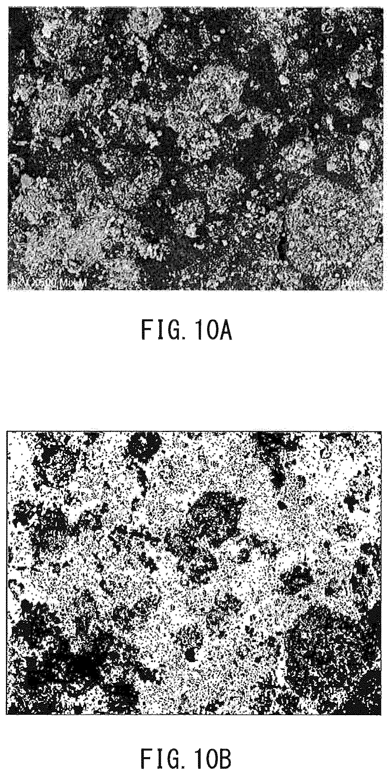

FIG. 10A shows a SEM image of the surface of the catalyst layer of the produced gas diffusion electrode, and FIG. 10B shows an extraction diagram of inter-particle voids as the results of measurement by image analysis performed in the same manner as in Example 1. The area ratio of the non-coated portions of the catalyst layer determined in the same manner as in Example 1 was 41.7%.

The thickness of the catalyst layer measured from a cross-sectional SEM image of the produced gas diffusion electrode was 0.4 to 1 µm. As can be seen from the cross-sectional SEM image, in the gas diffusion electrode the present reference example, immersion of the coating material for forming a catalyst layer in the conductive porous substrate was not observed. However, uneven coating of the catalyst layer was even more increased than that in the gas diffusion electrode of Reference Example 1.

### (Comparative Example 1)

A coating material for forming a catalyst layer was produced in the same manner as in Example 1 except that the solvent of the coating material for forming a catalyst layer was changed to isopropyl alcohol (IPA, surface tension: 20.8 mN/m), and the solid content concentration thereof was changed to 10 mass%. The contact angle of the produced coating material for forming a catalyst layer with the conductive porous substrate was 8.1°.

As a result of applying the coating material for forming a catalyst layer using a bar coater at a coating amount of 1 mg/cm² to the surface of the conductive porous substrate of the gas diffusion layer produced in the same manner as in Example 1, only the solvent of the coating material for forming a catalyst layer permeated into the conductive porous substrate within several to several tens of seconds from the start of coating, and it was impossible to continue the coating due to coagulation of the coating material, generation of stripe-shaped non-coated portions, and so forth.

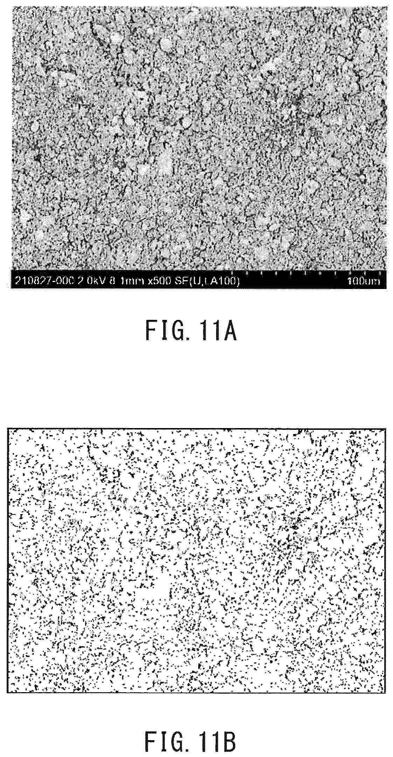

FIG. 11A shows a SEM image of the surface of the catalyst layer of the gas diffusion electrode formed immediately after the start of coating, and FIG. 11B shows an extraction diagram of inter-particle voids as the results of measurement by image analysis performed in the same manner as in Example 1. The area ratio of the non-coated portions of the catalyst layer determined in the same manner as in Example 1 was 1.53%.

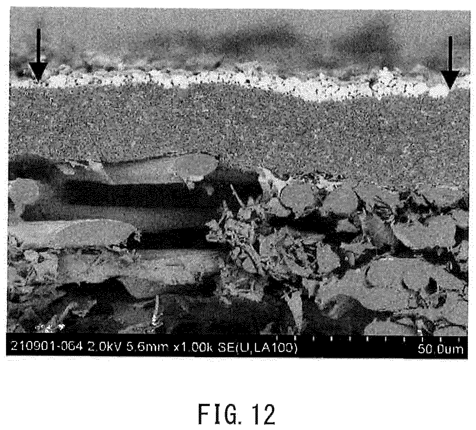

FIG. 12 shows a cross-sectional SEM image of the produced gas diffusion electrode. The thickness of the catalyst layer measured from FIG. 12 was 3 to 5 µm. As can be seen from FIG. 12, in the gas diffusion layer of the present comparative example, projections and recesses were formed on the interface between the catalyst layer and the conductive porous substrate, and immersion of the coating material for forming a catalyst layer in the conductive porous substrate was observed. Furthermore, the catalyst layer was not formed on the portion indicated by the arrow in the drawing, demonstrating that uneven coating of the catalyst layer has occurred.

### (Comparative Example 2)

### <Production of Coating Material For forming Conductive Porous Substrate>

A coating material for forming a conductive porous substrate was produced in the same manner as in Example 1 except that carbon black having an average particle size of 40 nm was used as the conductive particles.

### <Production Of Gas Diffusion Layer>

A carbon non-woven fabric having a thickness of 160 µm and a porosity of 70.1% was prepared as a gas diffusion substrate of a gas diffusion layer. Next, the produced coating material for forming a conductive porous substrate was applied to one side of the carbon non-woven fabric, then dried, to produce a gas diffusion layer in which the conductive porous substrate was stacked on the carbon non-woven fabric, without performing a firing process. The dried conductive porous substrate had a thickness of 75 µm, an average pore diameter of 0.39 µm, a porosity of 62.7%, and a critical surface tension of 24.2 mN/m.

### <Production Of Gas Diffusion Electrode>

A coating material for forming a catalyst layer produced in the same manner as in Example 1 and having a contact angle with the conductive porous substrate of 10.3° was applied, using a bar coater at a coating amount of 0.2 mg/cm², to the surface of the conductive porous substrate of the produced gas diffusion layer. As a result, the coating material permeated into the conductive porous substrate simultaneously with the start of coating, and thus was unable to be spread by the bar coater.

The results of the foregoing are collectively shown in Table 1.

**[Table 1]**

| | Coating method/Coating amount (mg/cm²) | Surface tension of solvent of coating material (mN/m) | Critical surface tension of substrate (mN/m) | Contact angle between substrate and coating material (°) | Solid content concentration of coating material (mass%) | Thickness of catalyst layer (µm) | Area ratio of non-coated portions (%)/State of catalyst layer |
|---|---|---|---|---|---|---|---|
| Example 1 | Bar coating/0.2 | 23.5 | 22.6 | 42.1 | 5 | 0.4-1.1 | 4.63/Smooth |
| Example 2 | Bar coating/1.7 | 23.5 | 22.6 | 42.1 | 18 | 8.0-8.5 | 0.11/Smooth |
| Example 3 | Bar coating/0.2 | 25.6 | 22.6 | 125.8 | 10 | 0.7-2.0 | 12.85/Smooth |
| Example 4 | Bar coating/0.2 | 26.6 | 22.6 | 52.0 | 8 | 0.4-1.2 | 4.57/Smooth |
| Ref. ex. 1 | Spraying/1.5 | 23.5 | 22.6 | 42.1 | 5 | 5-11 | 17.02/Not smooth |
| Ref. ex. 2 | Spraying/0.2 | 23.5 | 22.6 | 42.1 | 5 | 0.4-1 | 41.7/Not smooth |
| Com. ex. 1 | Bar coating/1 | 20.8 | 22.6 | 8.1 | 10 | 3-5 | 1.53/Impossible to continue coating |
| Com. ex. 2 | Bar coating/0.2 | 23.5 | 24.2 | 10.3 | 5 | - | -/Not coatable |

From Table 1, it can be seen that, in the gas diffusion electrodes of Examples 1 to 4, in which the coating material for forming a catalyst layer was applied by a bar coating method, a catalyst layer made of a uniform thin film was able to be formed on the conductive porous substrate.

On the other hand, in Reference Example 1, in which the same coating material as that in Example 1 was spray coated at an increased coating amount, and Reference Example 2, in which the same coating material as that in Example 1 was spray coated at the same coating amount as that in Example 1, the infiltration of the coating material for forming a catalyst layer into the voids of the conductive porous substrate was prevented as in the case of the gas diffusion electrode of Examples 1 to 4. However, in both of the reference examples, the area ratio of the non-coated portions exceeded 15%, resulting in lower uniformity of the catalyst layer than in the gas diffusion electrodes of Examples 1 to 4. In both Comparative Example 1 and Comparative Example 2, in which the surface tension of the solvent of the coating material had a value smaller than the critical surface tension of the substrate, the coating material for forming a catalyst layer infiltrated into the voids of the conductive porous substrate. Accordingly, the continuance of coating, or coating itself was not possible.

The present application may be embodied in forms other than the above-described forms. The embodiments disclosed in the present application are merely examples, and the present application is not limited thereto. The scope of the present application is to be construed in view of the appended claims, rather than the foregoing description, and all changes that come within the meaning and range of equivalency of the claims are intended to be embraced therein.

### Industrial Applicability

As described thus far, a gas diffusion electrode according to the present application includes a uniform catalyst layer, and therefore electrochemical reactions in an electrolytic cell using the gas diffusion electrode become uniform, and the local degradation of the catalyst layer can be suppressed, thus making it possible to stably use the electrolytic cell for an extended period of time.

### Description of Reference Numerals

- 10: Gas diffusion electrode
- 11: Gas diffusion layer
- 11a: Gas diffusion substrate
- 11b: Conductive porous substrate
- 12: Catalyst layer
- 21: Positive electrode
- 21a: Gas diffusion layer
- 21b: Catalyst layer
- 22: Negative electrode
- 22a: Gas diffusion layer
- 22b: Catalyst layer
- 23: Ion conductive membrane
- 24, 25: Current collector plate
- 24a, 25a: Pore
- 24b, 25b: Lead body
- 26: Reaction gas flow path
- 27: Electrolytic solution container
- 28: Electrolytic solution
- 29: Sealing material
- 30: Electrolytic cell
- 31: Membrane electrode assembly

## Claims

1. A composition for forming a catalyst layer, the composition comprising:
catalyst particles;
a binder; and
a solvent, wherein
the catalyst particles have an average particle size of primary particles of 1 to 500 nm,
the solvent has a surface tension in a range from 23 to 33 mN/m, and
the composition has a solid content concentration of 1 to 20 mass%.

2. The composition for forming a catalyst layer according to claim 1, wherein the catalyst particles are composed of a metal or a metal oxide including at least one element selected from the group consisting of Cu, Sn, Mn, Fe, Ni, Ti, Co, Zn, In, Mo, W, Y, Zr, Pd, Au, Ag, Ru, Rh, Pt, Ce, Ir, and Bi.

3. The composition for forming a catalyst layer according to claim 1, wherein the binder is at least one selected from the group consisting of polyperfluorocarbon sulfonic acid, polystyrene, polyether ketone, polyether ether ketone, polysulfone, polyether sulfone, polyvinylidene fluoride, polytetrafluoroethylene, polyacrylic acid, and polyimide.

4. The composition for forming a catalyst layer according to claim 1, wherein the composition comprises, as the solvent, at least one selected from the group consisting of isopropanol, 2-isopropoxy ethanol, methoxy propanol, butyl propylene diglycol, isobutyl diglycol, dimethyl diglycol, propylene glycol, methyl propylene triglycol, butyl diglycol, methyl glycol, propyl propylene diglycol, isopropyl diglycol, benzyl glycol, benzyl diglycol, phenyl glycol, and ethylene glycol.

5. A method for producing a catalyst layer, the method comprising:
applying the composition for forming a catalyst layer according to any one of claims 1 to 4 onto a conductive porous substrate, and drying the composition, wherein
the conductive porous substrate has a critical surface tension of less than 29 mN/m, and the critical surface tension has a value smaller than the surface tension of the solvent of the composition for forming a catalyst layer.

6. The method for producing a catalyst layer according to claim 5, wherein the applying is performed by a bar coating method or a spin coating method.

7. The method for producing a catalyst layer according to claim 5, wherein the conductive porous substrate has a contact angle with the composition for forming a catalyst layer, of 15 to 130°.

8. The method for producing a catalyst layer according to claim 5, wherein the conductive porous substrate is a porous film including conductive particles having an average particle size of 10 to 100 nm, and a binder.

9. The method for producing a catalyst layer according to claim 8, wherein the conductive particles are carbon particles.

10. The method for producing a catalyst layer according to claim 5, wherein a drying temperature of the composition for forming a catalyst layer is 25 to 180°C.

11. A gas diffusion electrode comprising:
a conductive porous substrate; and
a catalyst layer formed on a surface of the conductive porous substrate, wherein
the conductive porous substrate has a critical surface tension of less than 29 mN/m,
the catalyst layer includes catalyst particles having an average particle size of primary particles of 1 to 500 nm, and a binder,
the catalyst layer has a thickness of 10 µm or less, and
an area ratio of non-coated portions of the catalyst layer calculated by image analysis is 15% or less.

12. The gas diffusion electrode according to claim 11, wherein the catalyst layer has a thickness of 0.1 µm or more.

13. The gas diffusion electrode according to claim 11, wherein the conductive porous substrate is a porous film including conductive particles having an average particle size of 10 to 100 nm, and a binder.

14. The gas diffusion electrode according to claim 13, wherein the conductive particles are carbon particles.

15. The gas diffusion electrode according to claim 11, wherein the conductive porous substrate has an average pore diameter of 0.1 to 1 µm.

16. The gas diffusion electrode according to claim 11, wherein the conductive porous substrate has a porosity of 30 to 70 vol%.

17. An electrolytic cell comprising:
a positive electrode;
a negative electrode; and
an ion conductive membrane disposed between the positive electrode and the negative electrode, wherein
the positive electrode is the gas diffusion electrode according to any one of claims 11 to 16.
